# EUROPÄISCHE PATENTANMELDUNG

(11) **EP 1 688 971 A2**
(43) Veröffentlichungstag der Anmeldung: **09.08.2006**
(21) Anmeldenummer: 06000549.3
(22) Anmeldetag: 12.01.2006
(51) Int. Cl.: H01F 1/00

(54) **Elektromagnetanordnung zum Ansteuern eines Steuerkolbens eines Ventils**

(30) Priorität: 20.01.2005 DE 102005002588
(71) Anmelder: LuK Lamellen und Kupplungsbau Beteiligungs KG, 77815 Bühl (DE)
(72) Erfinder: Viggo, L. Norum, 3612 Kongsberg (NO)

(57) **Zusammenfassung**

Es wird eine Elektromagnetanordnung zum Ansteuern eines Steuerkolbens eines Ventils, insbesondere eines Proportional- oder eines Schaltventils, vorgeschlagen, mit einer in einem Gehäuse angeordneten Spulenanordnung, welche einen Spulenkern aufweist, wobei der den Magnetfluss leitende Spulenkern gehäusefest angeordnet ist und mit einem etwa ringförmigen und bewegbaren Ankerelement in Kontakt steht.

## Beschreibung

Die vorliegende Erfindung betrifft eine Elektromagnetanordnung zum Ansteuern eines Steuerkolbens eines Ventils, insbesondere eines Proportional- oder eines Schaltventils, mit einer in einem Gehäuse angeordneten Spulenanordnung, welche einen Spulenkern aufweist.

Beispielsweise sind aus der Fahrzeugtechnik Elektromagnetanordnungen zum Ansteuern von Ventilanordnungen bekannt. Dabei wird bei den herkömmlichen Magneten die Magnetkraft zum Ansteuern der Ventilanordnung dadurch erzeugt, dass ein relativ schwerer Anker aus Weicheisen als Spulenkern das resultierende Magnetfeld, welches die Spulenanordnung umgibt, durch eine Lagerstelle aus dem Blechmantel aufnimmt und zu einem feststehenden Polring führt. Bei der bekannten Elektromagnetanordnung bilden der Polring und der Anker eine Tauchstufe, die den Magnetfluss drosselt. Auf diese Weise entsteht eine Axialkraft an dem bewegbaren Spulenkern der Spulenanordnung, die die Tauchtiefe zu erhöhen versucht.

Bei der bekannten Elektromagnetanordnung führt der Spulenkern, bestehend aus dem Polring und dem Anker, den Magnetfluss durch die Spule und erzeugt die Kraft zum Ansteuern der Ventilanordnung. Aufgrund der Magnetflussleitungsfunktion ergibt sich eine relativ große Baulänge, die durch die Spulenlänge vorgegeben wird, und ein großer Durchmesser des Spulenkerns. Aufgrund der großen Abmessungen ergibt sich auch eine hohe Masse, die das dynamische Verhalten der Elektromagnetanordnung maßgeblich bestimmt.

Demnach liegt der vorliegenden Erfindung die Aufgabe zugrunde, eine Elektromagnetanordnung der eingangs genannten Gattung vorzuschlagen, bei der trotz möglichst hoher Tauchtiefen auch eine gewünschte Dynamik zum Ansteuern des Ventils beibehalten bzw. erhöht wird.

Diese Aufgabe wird durch eine Elektromagnetanordnung zum Ansteuern eines Steuerkolbens eines Ventils, insbesondere eines Proportional- oder eines Schaltventils, gelöst, mit einer in einem Gehäuse angeordneten Spulenanordnung, welche einen Spulenkern aufweist, wobei der den Magnetfluss leitende Spulenkern gehäusefest angeordnet ist und mit einem etwa ringförmigen und bewegbaren Ankerelement in Kontakt steht.

Auf diese Weise wird bei der erfindungsgemäßen Elektromagnetanordnung das Leiten des Magnetflusses von der Krafterzeugung zum Ansteuern des Steuerkolbens voneinander entkoppelt, so dass insgesamt die Ventildynamik trotz möglichst großer Hubbewegungen des Steuerkolbens erhöht wird. Die Tauchstufe bei der erfindungsgemäßen Elektromagnetanordnung wird durch das bewegbare Ankerelement und dem korrespondieren Gehäuseabschnitt gebildet. Vorzugsweise kann ein etwa ringförmiges z.B. aus Eisen gefertigtes Ankerelement verwendet werden. Es ist jedoch auch denkbar, dass andere konstruktive Ausgestaltungen verwendet werden, welche die gewünschte Krafterzeugung zum Ansteuern des Steuerkolbens ermöglichen.

Gemäß einer Weiterbildung der Erfindung kann das Ankerelement mit einem Trägerelement oder dergleichen an dem gehäusefesten Spulenkern verschiebbar angeordnet sein. Das Trägerelement kann beispielsweise eine nicht ferromagnetische Kunststoffumspritzung oder dergleichen sein. Bei der Verwendung von Kunststoff als Werkstoff ergibt sich ein möglichst geringes Gesamtgewicht für die bewegten Teile. Es sind jedoch auch andere Werkstoffe einsetzbar.

Um das Trägerelement mit dem ringförmigen Ankerelement an dem Spulenkern zu halten, kann gemäß einer vorteilhaften Ausgestaltung vorgesehen sein, dass das Trägerelement etwa topfförmig ausgebildet ist und ein Ende des Spulenkernes aufnimmt, so dass das Trägerelement mit dem Ankerelement längsverschiebbar am Spulenkern angeordnet ist. Diese Art der Lagerung des Ankerelements an den Spulenkern kann gegenüber bekannten Elektromagnetanordnungen die bewegte Masse um mindestens das zehnfache reduzieren.

Eine mögliche Lagerung des Trägerelements an dem Gehäuse kann dadurch realisiert werden, dass bei der erfindungsgemäßen Elektromagnetanordnung der äußere Wandbereich des Trägerelements an einem Hülsenabschnitt oder dergleichen des Gehäuses geführt ist. Vorzugsweise ist der äußere Durchmesser des Trägerelements geringfügig kleiner als der Innendurchmesser des Hülsenabschnittes. Auf diese Weise ist eine Längsbewegung des Trägerelements mit dem Ankerelement entlang des Hülsenabschnittes an dem Spulenkern bei Erzeugung einer entsprechenden Magnetkraft zwischen dem Ankerelement und dem Hülsenabschnitt des Gehäuses möglich.

Um die Längsbewegung des Trägerelements auf den Steuerkolben des Ventils zum Ansteuern von zugeordneten Steuerkanälen übertragen zu können, kann bei der vorliegenden Erfindung vorgesehen sein, dass der äußere Bodenbereich des Trägerelements mit einem Ende des Steuerkolbens gekoppelt ist. Beispielsweise kann der Steuerkolben über eine Federkraft oder dergleichen gegen den Bodenbereich des Trägerelements vorgespannt sein.

Das Ankerelement ist bei einer möglichen Ausführungsform der vorliegenden Erfindung von einem Aufnahmebereich der Innenwand des Trägerelements aufgenommen. Somit kann das etwa ringförmige Ankerelement in direktem Kontakt mit dem Spulenkern liegen, so dass sichergestellt wird, dass das Magnetfeld durch den Eisenankerring weitergeleitet wird, um eine Magnetkraft zwischen dem Ankerelement und dem Gehäuse zu erzeugen, so dass die erzeugte Magnetkraft eine Bewegung des Trägerelements und damit des dem Trägerelement zugewandten Steuerkolbens bewirkt.

Optimalerweise ist das ringförmige Ankerelement mit radial abstehenden Vorsprungbereichen ausgerüstet, die über den Umfang des Ankerelements verteilt angeordnet sind. Diese Vorsprungbereiche sind in korrespondierenden Aufnahmebereichen an der Wand des Trägerelements aufgenommen. Die Vorsprungbereiche bilden zwischen sich und dem Hülsenabschnitt des Gehäuses einen Spalt zwischen dem sich die Magnetkraft durch das Magnetfeld aufbaut, um das Ankerelement mit dem Trägerelement anzuziehen, so dass der dem Steuerkolben zugewandte Bodenabschnitt des Trägerelements den Steuerkolben beispielweise gegen eine Federkraft bewegt. Ferner dienen die Vorsprungbereiche als Anschlagbegrenzung für die Längsbewegung des Trägerelements.

Eine weitere vorteilhafte Ausgestaltung der vorliegenden Erfindung kann vorsehen, dass der Bodenbereich des topfförmigen Trägerelements zumindest eine Durchströmöffnung aufweist. Vorzugsweise sind über dem Umfang des Bodenbereichs des Trägerelements gleichmäßig verteilt mehrere Durchströmöffnungen angeordnet. Dadurch wird es einem Medium, wie z.B. Öl, ermöglicht, ohne weiteres die bewegten Teile zu umströmen, so dass der Bewegungswiderstand gering gehalten wird, welches wiederum die Dynamik des zu betätigenden Ventils verbessert.

Die erfindungsgemäße Elektromagnetanordnung kann mit besonderem Vorteil bei Systemen angewendet werden, welche eine besonders hohe Anforderung an die Dynamik einer Regelung stellen. Dies sind z.B. sogenannte Wankstabilisierungen oder auch Sicherheitsventile, beispielsweise von einem stufenlos verstellbaren Getriebe (CVT-Getriebe). Es sind jedoch auch andere Anwendungsmöglichkeiten für die vorgeschlagene Elektromagentanordung denkbar.

Nachfolgend wird die vorliegende Erfindung anhand der Zeichnungen näher erläutert. Es zeigen:
- Figur 1: eine schematische geschnittene Ansicht einer möglichen Ausführungsform einer erfindungsgemäßen Elektromagnetanordnung; und
- Figur 2: eine vergrößerte Detailansicht eines in einem Trägerelement gehaltenen Ankerelements der erfindungsgemäßen Elektromagnetanordnung.

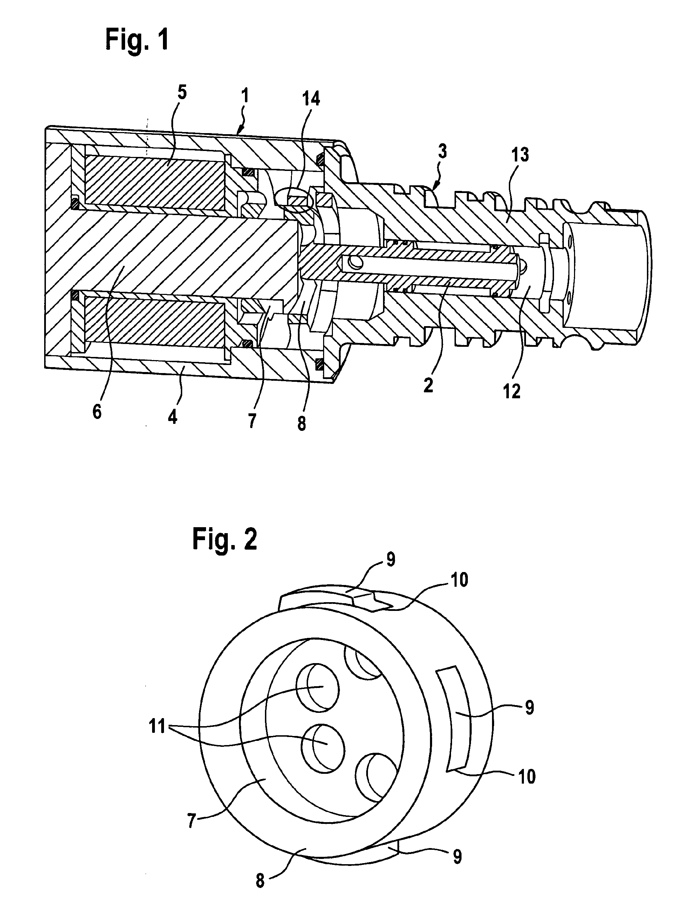

In Figur 1 ist eine mögliche Ausführungsform einer erfindungsgemäßen Elektromagnetanordnung 1 zum Ansteuern eines Steuerkolbens 2 eines nur teilweise angedeuteten Ventils 3 dargestellt, welches beispielsweise als Proportional- oder als Schaltventil ausgebildet ist.

Die Elektromagnetanordnung 1 weist ein Gehäuse 4 auf, in dem eine Spulenanordnung 5 angeordnet ist. Die Spulenanordnung 5 hat einen Spulenkern 6, beispielweise aus Weicheisen, der gehäusefest angeordnet ist. Der gehäusefeste Spulenkern 6 leitet das Magnetfeld zu einem mit dem Spulenkern 6 in Kontakt stehenden Ankerelement 7. Das Ankerelement 7 ist etwa ringförmig ausgebildet und von einem Trägerelement 8 an dem Spulenkern 6 bewegbar gehalten.

Das Ankerelement 7 und das Trägerelement 8 sind in Figur 2 detailliert dargestellt. Das Ankerelement 7 ist ringförmig ausgebildet und weist über seinem Umfang verteilt angeordnet mehrere radial vorstehende Vorsprungbereiche 9 auf. Das Trägerelement 8 ist etwa topfförmig ausgebildet und vorzugsweise aus einem nicht ferromagnetischen Material gefertigt. Das Trägerelement 8 weist mit den Vorsprungbereichen 9 korrespondierende Aufnahmebereiche 10 auf, in denen die Vorsprungbereiche 9 aufgenommen sind. Der Boden des topfförmigen Trägerelements 8 weist mehrere über den Umfang verteilt angeordnete Durchströmöffnungen 11 auf.

Der äußere Wandbereich des Trägerelements 8 ist an einem Hülsenabschnitt 14 des Gehäuses 4 geführt. Der äußere Durchmesser des Trägerelements 8 ist dabei geringfügig kleiner als der Innendurchmesser des Hülsenabschnittes 14. Auf diese Weise ist eine Längsbewegung des Trägerelements 8 mit dem Ankerelement 7 entlang des Hülsenabschnittes 14 an dem Spulenkern 6 möglich, wenn eine entsprechende Magnetkraft zwischen den Vorsprungbereichen 9 des Ankerelements 7 und dem Hülsenabschnitt 14 des Gehäuses 4 erzeugt wird. Dies ist durch einen Kreis in Figur 1 angedeutet.

Ein Ende des in einer Bohrung 12 eines Ventilgehäuses 13 geführten Steuerkolbens 2 ist dem äußeren Bodenbereich des Trägerelements 8 zugeordnet. Somit kann die Längsbewegung des Trägerelements 8 in eine von dem Spulenkern 6 abgewandte Richtung, also in Figur 1 nach rechts, auf den Steuerkolben 2 übertragen werden. Der Steuerkolben 2 kann z. B. mittels eines Federelements gegen den Bodenbereich des Trägerelements 8 vorgespannt werden. Es ist auch möglich, dass durch ein Medium eine Druckkraft auf den Steuerkolben 2 aufgebracht wird, um diese Vorspannung zu erreichen. Die Vorsprungbereiche 9 des Ankerelements 7 begrenzen die Längsbewegung des Trägerelements 8 als Anschlag. Durch die Bewegung des Steuerkolbens 2 in der Bohrung 12 des Ventilgehäuses 13 können je nach Bedarf vorbestimmte Steuerkanäle angesteuert werden.

Bei der erfindungsgemäßen Elektromagnetanordnung ergibt sich der besondere Vorteil, dass die bewegten Teile, nämlich das Ankerelement 7 mit dem Trägerelement 8, eine erheblich geringere Masse als bei bekannten Elektromagnetanordnungen aufweisen. Beispielsweise beträgt die Masse der bewegten Teile bei der hier dargestellten Ausführungsform etwa nur 2,4 Gramm, wobei im Vergleich bei der bekannten Elektromagnetanordnung eine Masse von 35 Gramm bei den bewegten Teilen erreicht wird.

### Bezuaszeichenliste

- 1.: Elektromagnetanordnung
- 2.: Steuerkolben
- 3.: Ventil
- 4.: Gehäuse
- 5.: Spulenanordnung
- 6.: Spulenkern
- 7.: Ankerelement
- 8.: Trägerelement
- 9.: Vorsprungbereich
- 10.: Aufnahmebereich
- 11.: Durchströmöffnung
- 12.: Bohrung
- 13.: Ventilgehäuse
- 14.: Hülsenabschnitt

## Patentansprüche

1. Elektromagnetanordnung zum Ansteuern eines Steuerkolbens eines Ventils, insbesondere eines Proportional- oder eines Schaltventils, mit einer in einem Gehäuse angeordneten Spulenanordnung, welche einen Spulenkern aufweist, **dadurch gekennzeichnet, dass** der den Magnetfluß leitende Spulenkern (6) gehäusefest angeordnet ist und mit einem etwa ringförmigen und bewegbaren Ankerelement (7) in Kontakt steht.

2. Elektromagnetanordnung nach Anspruch 1, **dadurch gekennzeichnet, dass** das Ankerelement (7) mit einem Trägerelement (8) an dem Spulenkern (6) verschiebbar angeordnet ist.

3. Elektromagnetanordnung nach Anspruch 1 oder 2, **dadurch gekennzeichnet, dass** das Trägerelement (8) etwa topfförmig ausgebildet ist und ein Ende des Spulenkernes (6) aufnimmt, so dass das Trägerelement (8) mit dem Ankerelement (7) längsverschiebbar an dem Spulenkern (6) gelagert ist.

4. Elektromagnetanordnung nach Anspruch 2 oder 3, **dadurch gekennzeichnet, dass** der äußere Wandbereich des Trägerelements (8) an einem Hülsenabschnitt (14) des Gehäuses (4) geführt ist.

5. Elektromagnetanordnung nach einem der Ansprüche 2 bis 4, **dadurch gekennzeichnet, dass** der äußere Bodenbereich des Trägerelements (8) mit einem Ende des Steuerkolbens (2) gekoppelt ist.

6. Elektromagnetanordnung nach einem der Ansprüche 2 bis 5, **dadurch gekennzeichnet, dass** das Ankerelement (7) in einem Aufnahmebereich der Innenwand des Trägerelements (8) gehalten ist.

7. Elektromagnetanordnung nach einem der vorangehenden Ansprüche, **dadurch gekennzeichnet, dass** das Ankerelement (7) über den Umfang verteilt mehrere radial abstehende Vorsprungbereiche (9) aufweist.

8. Elektromagnetanordnung nach Anspruch 7, **dadurch gekennzeichnet, dass** die Vorsprungbereiche (9) in korrespondierenden Aufnahmebereichen (10) des Trägerelementes (8) aufgenommen sind.

9. Elektromagnetanordnung nach einem der vorangehenden Ansprüche 2 bis 7, **dadurch gekennzeichnet, dass** der Boden des topfförmigen Trägerelements (8) zumindest eine Durchströmöffnung (11) aufweist.
